Europäisches Patentamt

European Patent Office

Office européen des brevets

(19)

(11) Veröffentlichungsnummer: **0 232 452**
**B1**

(12) **EUROPÄISCHE PATENTSCHRIFT**

(45) Veröffentlichungstag der Patentschrifft: 21.03.90

(21) Anmeldenummer: 86109266.6

(22) Anmeldetag: 07.07.86

(51) Int. Cl.⁵: **B 01 D 53/34**

(54) Verfahren zum Abscheiden von Stickstoffoxiden aus Rauchgassen.

(30) Priorität: 08.02.86 DE 3604045

(43) Veröffentlichungstag der Anmeldung:
19.08.87 Patentblatt 87/34

(45) Bekanntmachung des Hinweises auf die Patenterteilung:
21.03.90 Patentblatt 90/12

(84) Bennante Vertragsstaaten:
AT BE CH DE FR GB IT LI LU NL SE

(56) Entgegenhaltungen:
WO-A-83/00057
DE-A-2 911 712
DE-A-3 337 793

(73) Patentinhaber: STEAG AG
Bismarckstrasse 54 Postfach 10 37 62
D-4300 Essen 1 (DE)

(72) Erfinder: Eichholtz, Andreas, Dr. Ing.
Brinkstrasse 41
D-4350 Recklinghausen (DE)
Erfinder: Weiler, Helmut, Ing. grad.
Hofer Heide 31
D-5620 Velbert 1 (DE)

(74) Vertreter: Zenz, Joachim Klaus, Dipl.-Ing.
ZENZ & HELBER Patentanwälte Am Ruhrstein 1
D-4300 Essen 1 (DE)

**Beschreibung**

Die Erfindung bezieht sich auf ein Verfahren zum Abscheiden von Stickstoffoxiden aus Rauchgasen, bei dem ein kontinuierlicher Rauchgasstrom vorzugsweise nach Durchlauf einer Rauchgasentschwefelungsanlage durch wenigstens ein Bett, eine Schicht oder Struktur aus katalytisch wirkenden Adsorptionsmitteln geleitet und dem Rauchgasstrom Ammoniak ($NH_3$) als Reduktionsmittel zudosiert wird.

Aus der DE-A-2 911 712 ist ein zweistufiges Verfahren bekannt, bei dem in einer ersten Wanderschicht zunächst ein wesentlicher Teil der Schwefeloxide adsorptiv entfernt wird und danach in einer zweiten Wanderschicht aus körnigem kohlenstoffhaltigen Adsorptionsmittel in einem Verfahren der eingangs genannten Art nach dosierter Zugabe von gasförmigem Ammoniak die Stickstoffoxide katalytisch zu Stickstoff reduziert sowie weitere Schwefeloxide abgeschieden werden. Beim Einsatz von Aktivkoks als Katalysator zur $NO_x$-Minderung unter Verwendung von Ammoniak als Reduktionsmittel müssen stets große $NH_3$-Mengen an den inneren Oberflächen des Aktivkokses adsorbiert und gespeichert sein. Dies bedingt einen hohen $NH_3$-Partialdruck, d.h. eine hohe $NH_3$-Konzentration in der Gasphase oberhalb des stöchiometrischen Bedarfs für den $NO_x$-Umsatz. Sobald der Aktivkoks bis zum Gleichgewicht mit $NH_3$ beladen ist, treten zwangsläufig große $NH_3$-Konzentrationen in der Gasphase hinter der Aktivkoksstufe auf.

Bei allen bekannten Verfahren der eingangs genannten Art wird das Reduktionsmittel Ammoniak in einer von dem gewünschten $NO_x$-Abscheidegrad abhängigen Menge kontinuierlich dem Rauchgas vor der $NO_x$-Aktivkoksstufe zugeführt. Bei hohen $NO_x$-Abscheidegraden, so z. B. > 70 % waren hohe $NH_3$-Konzentrationen im Rauchgas hinter der Aktivkoksstufe bisher unvermeidbar.

Bei simultaner Abscheidung von $SO_2$ und $NO_x$ wurde dieser Ammoniaküberschuß deshalb in einer getrennten Stufe aufgefangen, die mit Aktivkoks aus der $SO_2$-Stufe kontinuierlich durchlaufen wird. Dieser Aktivkoks ist mit sauren Komponenten der $SO_2$-Stufe beladen und sorgt daher für eine starke Verminderung der $NH_3$-Konzentration in der Gasphase. Bei alleinigem Einsatz von Aktivkoks zur $NO_x$-Minderung steht mit sauren Komponenten beladener Aktivkoks nicht in ausreichender Menge zur Verfügung.

Der Erfindung liegt die Aufgabe zugrunde, die obengenannten Nachteile herkömmlicher Verfahren auszuräumen und bei großen $NO_x$-Abscheidegraden (> 70 %) die Ammoniakkonzentrationen hinter dem Adsorptionsmittelreaktor ohne wesentlichen Aufwand zu vermindern.

Ausgehend von dem Verfahren der eingangs genannten Art, wird diese Aufgabe erfindungsgemäß dadurch gelöst, daß die Ammoniakzugabe zum kontinuierlichen Rauchgasstrom in periodischen Intervallen zwischen einer hohen $NH_3$-Zugabemenge und einer niedrigen $NH_3$-Zugabemenge oder einer Zugabepause sprunghaft geändert wird. Bei der Erfindung wird das Reduktionsmittel Ammoniak nicht mehr – wie bisher – kontinuierlich, sondern in Intervallen dem kontinuierlichen Rauchgasstrom vor dem Adsorptionsmittelreaktor zudosiert. In diesen Intervallen mit Dosierung kann periodisch jeweils eine höhere $NH_3$-Menge als bei der kontinuierlichen Zugabe eingesetzt werden, wodurch sowohl der $NO_x$-Abscheidegrad als auch die $NH_3$-Beladung des beispielsweise aus Aktivkoks bestehenden Adsorptionsmittels in der Reaktionszone gesteigert werden können, ohne daß eine übermäßig hohe $NH_3$-Konzentration im Rauchgas hinter dem Reaktor auftritt. Durch die intermittierende Ammoniakzugabe wird daher die $NH_3$-Konzentration hinter der Reaktionsstufe bei dem gewünschten hohen $NO_x$-Abscheidegrad wesentlich vermindert.

Die Länge der Zugabeintervalle und die in diesen Intervallen zudosierten $NH_3$-Mengen richten sich einerseits nach dem Sollwert des $NO_x$-Abscheidegrades und andererseits nach der $NH_3$-Konzentration an einer geeigneten Sondierungsstelle innerhalb des Betts des Adsorptionsmittelreaktors.

In Weiterbildung der Erfindung ist daher vorgesehen, daß die $NH_3$-Konzentration in der in Rauchgas-Strömungsrichtung hinteren Hälfte des Adsorptionsbetts gemessen wird und daß die $NH_3$-Zugabemengen und/oder die Zugabeintervallängen in Abhängigkeit von der gemessenen $NH_3$-Konzentration geregelt werden. Der Sollwert des $NO_x$-Abscheidegrades kann dabei als Führungsgröße in die $NH_3$-Zugabemengen- und/oder Intervallängenregelung eingegeben werden.

Andererseits ist es aber auch möglich, die $NH_3$-Zugabemenge oder die $NH_3$-Zugabeintervallänge in Abhängigkeit von dem $NH_3$-Konzentrationsmeßwert zu regeln und die andere Veränderliche nach dem Sollwert des $NO_x$-Abscheidegrades voreinzustellen.

Der $NH_3$-Mengenstrom in den Intervallen hoher $NH_3$-Zugabemenge sollte mindestens doppelt so hoch wie in den Intervallen niedriger Zugabemenge eingestellt werden. Die Steilheit der Flanken zwischen den Intervallen unterschiedlicher $NH_3$-Zugabeniveaus ist im Hinblick auf die regelmäßig relativ lange Behandlungsdauer für die erfindungsgemäße Verfahrensweise unkritisch, so daß auch relativ träge Stellglieder und Regelstrecken verwendet werden können.

Die Dauer der Intervalle hoher $NH_3$-Zugabemengen ist vorzugsweise kürzer oder gleich der Dauer der Intervalle niedriger $NH_3$-Zugabemengen. Das Tastverhältnis dieser beiden Intervalle kann zwischen 1 : 60 und 1 : 1 eingestellt werden.

Bei dem erfindungsgemäßen Verfahren läßt sich sowohl ein Festbett als auch ein Wanderbett aus einem körnigen, kohlenstoffhaltigen Adsorptionsmittel einsetzen.

Die erfindungsgemäße Intervalldosierung von $NH_3$ läßt sich mit prinzipiell gleichen Vorteilen bei allen katalytisch wirkenden Adsorptionsmitteln anwenden, die auf Grund ihrer großen inneren Oberflächen eine hohe Speicherkapazität für die Reaktionskomponenten (Ammoniak, Stickoxid und Sauerstoff) haben. Hierzu gehören neben den obengenannten körnigen, kohlenstoffhaltigen Adsorptionsmitteln auch zeolithische Katalysatoren, die zur selektiven Adsorption bei der $NO_x$-Entfernung aus Rauchgasen beispielsweise aus der US-A-4 046 888 und der Zeitschrift ENERGIE, Jahrg. 37, Nr. 6, Juni 1985 bekannt sind. In jüngster Zeit gewinnen Molekularsieb-Katalysatoren zur selektiven katalytischen Stickoxidreduktion zunehmend an Bedeutung. Sie zeichnen sich durch hohe Volumenleistungen und Reduktionswirkungsgrade und Widerstandsfähigkeit gegen mechanischen Verschleiß aus. Die katalytische Wirkung des Molekularsiebs liegt bekanntlich in der Kristallgitterstruktur begründet. Mit der definierten Porengröße der Gitterstruktur von Molekularsieben kann eine hohe Selektivität erreicht werden.

Das erfindungsgemäße Verfahren ist dadurch weitergebildet, daß die Reaktion zum Abscheiden von $NO_x$ aus den Rauchgasen in einem Molekularsieb vorgenommen wird.

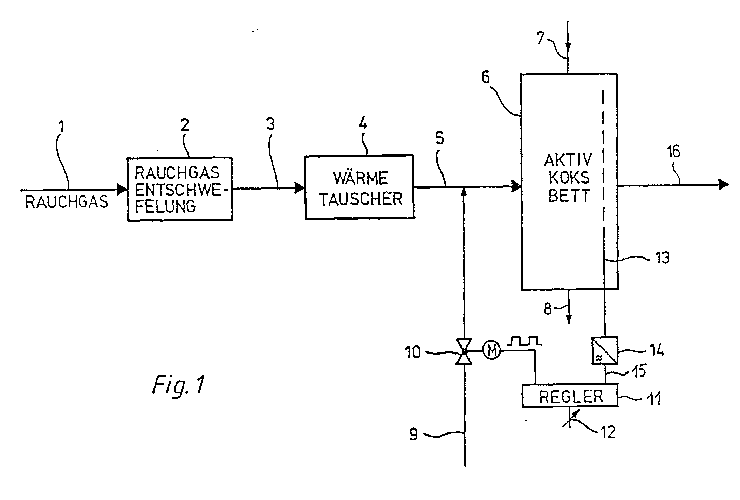

Im folgenden wird das erfindungsgemäße Verfahren anhand eines in der Zeichnung dargestellten schematischen Blockschaltbilds näher erläutert.

In der einzigen Figur bezeichnet 1 einen Rauchgaskanal, der zu einer Rauchgasentschwefelungsanlage 2 führt. Das entschwefelte Rauchgas wird über einen Rauchgaskanal 3 zu einem Wärmetauscher 4 geleitet, in welchem das Rauchgas auf die Reaktionstemperatur des sich an einen weiteren Rauchgaskanal 5 anschließenden Adsorptionsmittelreaktors 6 gebracht wird. Der Adsorptionsmittelreaktor enthält körnige, kohlenstoffhaltige Adsorptionsmittel, vorzugsweise Aktivkoks entweder im Festbett oder in einem Wanderbett. In dem zuletzt genannten Falle wird das Adsorptionsmittel durch einen Versorgungsstutzen 7 von oben in den Reaktor 6 eingegeben und bodenseitig durch eine Adsorptionsmittelabfuhr 8 abgeführt.

In den Rauchgaskanal 5 wird aus einer Ammoniakzufuhrleitung 9 kommendes und durch ein Dosierventil 10 mengengeregeltes Ammoniak ($NH_3$) dem Rauchgasstrom zugeführt. Das Dosierventil 10 wird von einem Regler 11 intervallweise geöffnet und geschlossen, so daß die $NH_3$-Zugabe zum kontinuierlichen Rauchgasstrom diskontinuierlich erfolgt. Der Regler 11 ist in dem beschriebenen Ausführungsbeispiel ein Rechner, beispielsweise ein Mikroprozessor, der die Länge des Zugabeintervalls sowie die in den Zugabeintervallen zudosierten $NH_3$-Mengen einerseits nach dem über den Eingang 12 in den Regler 11 von Hand eingegebenen Sollwert des $NO_x$-Abscheidegrades und andererseits nach der $NH_3$-Konzentration an einer $NH_3$-Partialdrucksonde 13 im Reaktor 6 regelt. Die $NH_3$-Partialdrucksonde 13 ist an einer geeigneten Stelle der hinteren Hälfte des Betts im Reaktor 6 angeordnet. Die Sondenmeßwerte werden über einen Meßumformer 14, dem ein A/D-Wandler nachgeschaltet sein kann, in meßwertproportionale elektrische Größen umgesetzt und als Regelgröße dem Regler 11 über eine Leitung 15 zugeführt.

Aus meßtechnischen Gründen kann es zweckmäßig sein, anstelle der $NH_3$-Konzentrationsmessung die $NO_x$-Konzentration (gem. als $NO_2$) an der Sondierstelle 13 oder am Reaktorausgang zu messen und danach in der zuvor prinzipiell beschriebenen Weise die $NH_3$-Zugabemenge intermittierend zu regeln.

Aufgrund der intermittierenden Zugabe von $NH_3$ zum Rauchgasstrom im Rauchgaskanal 5 tritt selbst bei hohen $NO_x$-Abscheidegraden oberhalb von 70 % das Rauchgas mit sehr niedriger $NH_3$-Konzentration durch den Rauchgaskanal 16 am Reaktorausgang aus.

**Beispiel**

1. Roh-Rauchgas:

| | | | | |
|---|---|---|---|---|
| Roh-Rauchgas: | $\dot{V}$ | = 1 000 000 $m^3$/h | (i.N.) tr. | |
| | $NO_x$ | = 1 000 mg/$m^3$ | " | gem. als $NO_2$ |
| | $SO_2$ | = 0 mg/$m^3$ | " | |
| Reingas: | $NO_x$ | = 200 mg/$m^3$ | (i.N.) tr. gem. als $NO_2$ | |
| | $NH_3$ | = 35 mg/$m^3$ | " | |

Gesamt-Ammoniakbedarf: 330,6 kg/h

| | | Menge |
|---|---|---|
| 1.1 Gesamtintervallänge: | 60 min. | |
| Zugabeintervallänge: | 5 min. | 330,6 kg |
| Ruheintervallänge: | 55 min. | 0 kg |
| Mengenverhältnis: | 330,6/0 = $\infty$ | |

| | | Menge |
|---|---|---|
| 1.2 Gesamtintervallänge: | 30 min. | |
| Intervallänge hoher Zugabemenge: | 5 min. | 110,2 kg |
| Intervallänge niedriger Zugabemenge: | 25 min. | 55,1 kg |
| Mengenverhältnis: | 110,2/55,1 = 2 | |

Bei dem erfindungsgemäßen Verfahren kann als Reduktionsmittel auch eine geeignete Ammoniakvorstufe, wie Lösungen von Ammoniak in Wasser oder Ammoniakcarbonat und dessen Lösung in Wasser, Harnstoff o.dgl. verwendet werden. Derartige Verbindungen bilden beim Verdampfen Ammoniak.

**Patentansprüche**

1. Verfahren zum Abscheiden von Stickstoffoxyden aus Rauchgasen, bei dem ein kontinuierlicher Rauchgasstrom vorzugsweise nach Durchlauf einer Rauchgasentschwefelungsanlage durch wenigstens ein Bett, eine Schicht oder Struktur aus katalytisch wirkenden Adsorptionsmitteln geleitet und dem Rauchgasstrom Ammoniak ($NH_3$) als Reduktionsmittel zudosiert wird, dadurch gekennzeichnet, daß die Ammoniakzugabe zum kontinuierlichen Rauchgasstrom in periodischen Intervallen zwischen einer hohen $NH_3$-Zugabemenge und einer niedrigen $NH_3$-Zugabemenge oder einer Zugabepause sprunghaft geändert wird.

2. Verfahren nach Anspruch 1, dadurch gekennzeichnet, daß die $NH_3$-Konzentration in der in Rauchgas-Strömungsrichtung hinteren Hälfte eines Adsorptionsmittelbetts gemessen wird und daß die $NH_3$-Zugabemengen und/oder die Zugabeintervallängen in Abhängigkeit von der gemessenen $NH_3$-Konzentration geregelt werden.

3. Verfahren nach Anspruch 2, dadurch gekennzeichnet, daß der Sollwert des $NO_x$-Abscheidegrades als Führungsgröße in die $NH_3$-Zugabemengen- und/oder Intervallängenregelung eingegeben wird.

4. Verfahren nach Anspruch 2, dadurch gekennzeichnet, daß die $NH_3$-Zugabemenge oder die $NH_3$-Zugabeintervallänge in Abhängigkeit von dem $NH_3$-Konzentrationsmeßwert geregelt und die andere Veränderliche nach dem Sollwert des $NO_x$-Abscheidegrades voreingestellt wird.

5. Verfahren nach einem der Ansprüche 1 bis 4, dadurch gekennzeichnet, daß der $NH_3$-Mengenstrom in den Intervallen hoher $NH_3$-Zugabemengen mindestens doppelt so hoch wie in den Intervallen niedriger Zugabemengen eingestellt wird.

6. Verfahren nach einem der Ansprüche 1 bis 5, dadurch gekennzeichnet, daß die Dauer der Intervalle hoher $NH_3$-Zugabemengen kürzer oder gleich der Dauer der Intervalle niedriger $NH_3$-Zugabemengen eingestellt wird.

7. Verfahren nach einem der Ansprüche 1 bis 6, dadurch gekennzeichnet, daß die Reaktion zum Abscheiden von Stickstoffoxiden in einem Festbett aus Aktivkoks vorgenommen wird.

8. Verfahren nach einem der Ansprüche 1 bis 6, dadurch gekennzeichnet, daß die Reaktion zum Abscheiden von Stickstoffoxiden aus den Rauchgasen in einem Wanderbett aus Aktivkoks vorgenommen wird.

9. Verfahren nach einem der Ansprüche 1 bis 6, dadurch gekennzeichnet, daß die Reaktion zum Abscheiden von Stickstoffoxiden aus den Rauchgasen in einem Molekularsieb vorgenommen wird.

## Claims

1. A process for separating off nitrogen oxides from flue gases, in which a continuous flue gas stream, preferably after passing through a flue gas desulphurization unit, is passed through at least one bed, layer or structure of catalytically acting adsorbents and a controlled flow of ammonia ($NH_3$) as a reducing agent is added to the flue gas stream, characterized in that the addition of ammonia to the continuous flue gas stream is changed abruptly at periodic intervals between a high quantity of added $NH_3$ and a low quantity of added $NH_3$ or a pause in addition.

2. A process as claimed in claim 1, characterized in that the $NH_3$ concentration is measured in the rear half, as viewed in the direction of flue gas flow, of an adsorbent bed and that the quantities of added $NH_3$ and/or the lengths of the addition intervals are controlled as a function of the measured $NH_3$ concentration.

3. A process as claimed in claim 2, characterized in that the intended value of the degree of $NO_x$ separation is the control variable input to the controller of the quantities of added $NH_3$ and/or of the interval lengths.

4. A process as claimed in claim 2, characterized in that the quantity of added $NH_3$ or the interval length of $NH_3$ addition is controlled as a function of the measured $NH_3$ concentration value and the other variable is set according to the intended value of the degree of $NO_x$ separation.

5. A process as claimed in any of claims 1 to 4, characterized in that the $NH_3$ mass flow in the intervals of high quantities of added $NH_3$ is set to be at least twice that in the intervals of low quantities added.

6. A process as claimed in any of claims 1 to 5, characterized in that the duration of the intervals of high quantities of added $NH_3$ is set to be shorter than or equal to the duration of the intervals of low quantities of added $NH_3$.

7. A process as claimed in any of claims 1 to 6, characterized in that the reaction for separating off nitrogen oxides is carried out in a fixed bed of activated coke.

8. A process as claimed in any of claims 1 to 6, characterized in that the reaction for separating off nitrogen oxides from the flue gases is carried out in a moving bed of activated coke.

9. A process as claimed in any of claims 1 to 6, characterized in that the reaction for separating off nitrogen oxides from the flue gases is carried out in a molecular sieve.

**Revendications**

1. Procédé pour éliminer des oxydes d'azote de gaz de fumée, dans lequel on introduit de façon dosée un courant continu de gaz de fumée de préférence après passage d'une installation de désulfuration de gaz de fumée à travers au moins un lit, une couche ou une structure d'adsorbants à action catalytique, et le courant de gaz de fumée ammoniac ($NH_3$) comme réducteur, caractérisé en ce que l'addition d'ammoniac au courant continu de gaz de fumée est modifiée de façon discontinue à des intervalles périodiques entre une addition de quantité élevée de $NH_3$ et une addition de faible quantité de $NH_3$ ou une pause d'addition.

2. Procédé selon la revendication 1, caractérisé en ce que la concentration de $NH_3$ est mesurée dans la moitié arrière dans la direction du courant de gaz de fumée d'un lit d'absorbant, et en ce que les quantités de $NH_3$ ajoutées et/ou les longueurs d'intervalles d'addition sont réglées en fonction de la concentration de $NH_3$ mesurée.

3. Procédé selon la revendication 2, caractérisé en ce que la valeur théorique du degré d'élimination de $NO_x$ est introduite comme grandeur directrice dans le réglage des quantités de $NH_3$ ajoutées et/ou des longueurs d'intervalle.

4. Procédé selon la revendication 2, caractérisé en ce que la quantité de $NH_3$ ajoutée ou la longueur des intervalles d'addition de $NH_3$ est réglée en fonction de la valeur mesurée de la concentration de $NH_3$ et en ce que les autres variables sont préréglées selon la valeur théorique du degré d'élimination de $NO_x$.

5. Procédé selon l'une des revendications 1 à 4, caractérisé en ce que le courant quantitatif de $NH_3$ dans les intervalles d'addition quantitative de $NH_3$ élevée est au moins deux fois plus élevé que dans les intervalles de faible addition quantitative.

6. Procédé selon l'une des revendications 1 à 5, caractérisé en ce que la durée des intervalles d'addition quantitative élevée de $NH_3$ est inférieure ou égale à la durée des intervalles de faible addition quantitative de $NH_3$.

7. Procédé selon l'une des revendications 1 à 6, caractérisé en ce qu'on procède à la réaction d'élimination d'oxydes d'azote dans un lit solidifié de coke actif.

8. Procédé selon l'une des revendications 1 à 6, caractérisé en ce qu'on procède à la réaction d'élimination d'oxydes d'azote à partir des gaz de fumée dans un lit itinérant de coke actif.

9. Procédé selon l'une des revendications 1 à 6, caractérisé en ce qu'on conduit la réaction d'élimination d'oxydes d'azote de gaz (de) fumée dans un tamis moléculaire.

*Fig. 1*